# FASCICULE DE BREVET EUROPEEN

(11) **EP 0 466 151 B1**
(45) Date de publication et mention de la délivrance du brevet: **04.10.1995**
(21) Numéro de dépôt: 91111556.6
(22) Date de dépôt: 11.07.1991
(51) Int. Cl.: G05B 19/04, H02J 13/00

(54) **Procédé d'attribution d'adresses dans un réseau domotique**
Verfahren zur Adressenzuordnung in einem Hausnetz
Address allocation method in a domestic network

(30) Priorité: 13.07.1990 FR 9008930
(43) Date de publication de la demande: 15.01.1992
(73) Titulaire: MOULINEX, F-93170 Bagnolet (FR)
(72) Inventeur: Gilbert, Jérôme, F-14123 Cormelles-le-Royal (FR); Parise, Vital André, F-14123 Cormelles-le-Royal (FR)
(74) Mandataire: May, Hans Ulrich, Dr.

(56) Documents cités:
- WO-A-90/07239
- FR-A- 2 337 478
- GB-A- 2 128 367
- US-A- 4 667 193
- US-A- 4 910 658

## Description

L'invention se rapporte à un procédé d'attribution d'adresses dans un réseau de distribution d'énergie électrique d'une habitation et dans lequel on utilise la technique des courants porteurs pour la transmission d'informations entre des émetteurs-récepteurs dits esclaves comportant chacun un microcontrôleur, et une mémoire EEPROM destinée à contenir différentes adresses relatives notamment à l'esclave et à l'habitation, et au moins une régie-maître comportant un microcontrôleur de gestion des informations qui est relié à un clavier de programmation et qui contient dans sa mémoire des programmes utilisateurs et différentes adresses relatives notamment aux esclaves et à l'habitation.

Dans les procédés d'attribution d'adresses connus tels que mis en oeuvre dans les systèmes de télécommande domotique du type décrit dans la demande de brevet français 2.624.289, les esclaves et la régie-maître comportent un système de codage défini par une structure matérielle constituée généralement de roues codeuses associées à des micro-interrupteurs. Non seulement, ce procédé est couteux, mais il s'avère compliqué et malcommode pour l'utilisateur.

Un autre procédé d'attribution d'adresses connu tel que décrit dans la demande de brevet FR-2 337 478 concerne un système d'échange d'informations entre plusieurs stations émettrices-réceptrices reliées par un canal de liaison et plus particulièrement l'initialisation d'une des stations émettrices-réceptrices dans un réseau où la station centrale n'est pas connue des autres stations, mais ce procédé ne permet pas une identification des esclaves dans un réseau.

Une autre demande de brevet WO90/07239 concerne un procédé d'immatriculation d'un organe dans un réseau à transmission par ondes électromagnétiques à haute fréquence dit réseau à canal ouvert.

Ledit procédé permet d'éviter toute interférence entre les organes reliés à un premier réseau ouvert et les organes reliés à un deuxième réseau ouvert. Ce procédé s'intéresse, d'une part, à des transmissions dans un réseau à canal ouvert et non dans un réseau à canal fermé et, d'autre part, fait dialoguer divers postes centraux, similaires aux régies maîtres, de manière à éviter les collisions, lesdits postes centraux émettant des signaux "ADI" comportant l'adresse du réseau et donc susceptible d'être capté par un autre poste central, qui imposera les messages aux esclaves et donc au capteur.

L'invention a pour but de supprimer ces inconvénients.

Selon l'invention, le procédé est caractérisé par le fait que, lors du branchement d'un esclave sur le réseau, on initialise la procédure d'attribution d'adresses en vérifiant s'il a déjà reçu d'un autre esclave branché sur le réseau un message de demande d'attribution d'adresse sans distinction d'adresse d'habitation émis de cet autre esclave sur le réseau, dans l'affirmative on déclenche un sous-programme d'attente de poursuite et, dans la négative, tout d'abord un utilisateur appuie sur un bouton poussoir de manière à déclencher un sous-programme de fabrication d'un message contenant les informations suivantes : diffusion générale ; demande d'attribution d'adresse ; adresse de l'esclave demandeur proposée par la régie-maître, ensuite on envoie le message sur le réseau, on attend une réponse de la régie-maître audit message, puis dès réception de ladite réponse, l'esclave demandeur met en mémoire l'adresse d'habitation et l'adresse de l'esclave, cette dernière adresse pouvant être soit l'adresse proposée envoyée, soit une adresse modifiée par la régie-maître au moyen du clavier de programmation.

Grâce à ce procédé, on comprendra que pour adresser un esclave dans le réseau, l'utilisateur effectue une simple action sur le bouton poussoir de l'esclave, déclenchant ainsi automatiquement la transmission du message d'attribution d'adresse vers la régie-maître qui le gérera.

Les caractéristiques et avantages de l'invention ressortiront d'ailleurs de la description qui va suivre, à titre d'exemple, en référence aux dessins annexés dans lesquels :

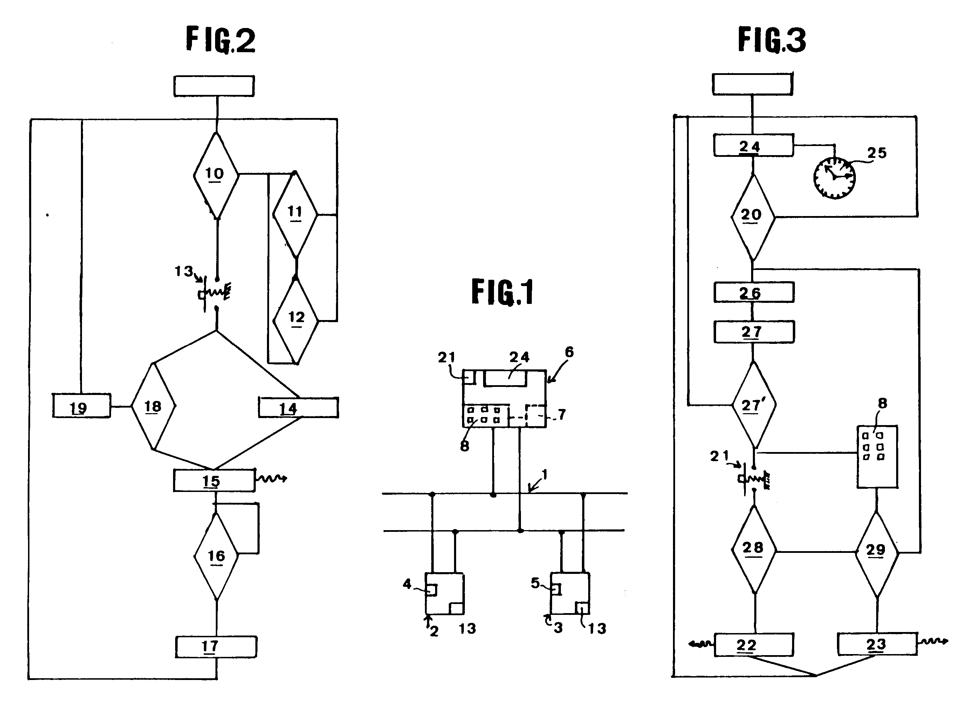

la figure 1 est un schéma simplifié illustrant le branchement de récepteurs esclaves et d'une régie-maître sur un réseau auquel est appliqué le procédé d'attribution d'adresses selon l'invention ; la figure 2 représente le diagramme du programme contenu dans la mémoire de l'esclave et destiné à la mise en oeuvre du procédé ; la figure 3 représente le diagramme du programme contenu dans la mémoire de la régie-maître et destiné à la mise en oeuvre du procédé.

Tel qu'il est schématisé sur la figure 1, le réseau 1 de distribution d'énergie électrique d'une habitation est équipé d'émetteurs-récepteurs 2, 3.. dits esclaves comportant chacun un microcontrôleur 4, 5.., une mémoire EEPROM destinée à contenir différentes adresses relatives notamment à l'esclave et à l'habitation, ainsi qu'un moyen de commande d'un appareil d'utilisation (non représenté) qui lui est associé, par exemple, un appareil électroménager tel qu'une cafetière, un volet à moteur électrique ou une lampe de chevet, ledit microcontrôleur contenant à cet effet dans sa mémoire morte ROM, une adresse famille propre à chaque appareil d'utilisation. Sur ce réseau est également branchée une régie-maître 6 comportant un microcontrôleur 7 de gestion des informations qui est relié à un clavier de programmation 8 et qui contient dans sa mémoire des programmes utilisateurs et différentes adresses relatives notamment aux esclaves et à l'habitation.

Les microcontrôleurs utilisés sont par exemple du type 80C51 fabriqués, par exemple, par la Société INTEL.

Pour échanger les informations entre les esclaves 2, 3.. et la régie-maître 6, on utilise la technique bien connue des courants porteurs qui consiste à moduler un signal porteur de haute fréquence par les informations à transmettre, à l'émettre sur le réseau 1 de distribution qui, en France, possède une tension de 220 volts et une fréquence de 50 hertz, puis à le démoduler de manière à reformer lesdites informations pour leur traitement.

Selon l'invention, pour permettre une communication sans erreur d'identification entre les esclaves et la régie-maître, on utilise le procédé d'attribution d'adresses suivant.

Au niveau des esclaves, en particulier lors du branchement d'un esclave sur le réseau, et comme représenté sur la figure 2, on initialise la procédure d'attribution d'adresses en vérifiant 10 si l'esclave a déjà reçu un message de demande d'attribution d'adresse sans distinction d'adresse d'habitation. Dans l'affirmative, on déclenche un sous-programme 11-12 d'attente de poursuite, dans la négative on appuie sur un bouton poussoir 13 de l'esclave de manière à déclencher un sous-programme 14 de fabrication d'un message contenant les informations suivantes : diffusion générale ; demande d'attribution d'adresse ; adresse de l'esclave demandeur proposée par la régie-maître lors du branchement. On envoie 15 le message sur le réseau, on attend 16 une réponse de la régie-maître audit message, puis dès réception de ladite réponse, l'esclave demandeur met en mémoire 17 l'adresse d'habitation et l'adresse de l'esclave, cette dernière adresse pouvant être soit l'adresse proposée envoyée, soit une adresse modifiée par la régie-maître au moyen du clavier de programmation 8.

Dès que l'on appuie sur le bouton poussoir 13, on envoie également un signal de déclenchement d'une temporisation 18 d'interruption de la poursuite de la procédure, et si l'on arrive à l'expiration du temps de la temporisation, on émet un message 19 de libération des autres esclaves, sinon on poursuit la procédure. La durée de temporisation est par exemple de l'ordre de cinq minutes.

Dans le sous-programme d'attente de poursuite, on teste 11 pour savoir si on a reçu une réponse à la demande d'attribution d'adresse, et dans l'affirmative on retourne à la procédure d'initialisation, tandis que dans la négative on teste 12 pour savoir si un message de libération des esclaves est arrivé, dans l'affirmative on retourne à la procédure d'initialisation.

On se référera maintenant à la figure 3 qui illustre la procédure utilisée par la régie-maître pour dialoguer avec la pluralité d'esclaves insérés dans le réseau.

Comme on le voit la régie-maître scrute 20 en permanence le réseau 1, afin de capter un message de demande d'attribution d'adresse sans distinction d'adresse d'habitation émis par l'un des esclaves. Dans l'affirmative, on émet vers l'esclave, soit au moyen d'une touche de validation 21, un message 22 d'acquiescement, contenant les informations suivantes : diffusion générale ; réponse à la demande d'adresse, adresse d'habitation, adresse proposée de l'esclave, soit au moyen du clavier 8 un message d'acquiescement corrigé 23 comportant des informations semblables au message d'acquiescement mais dans lequel on a substitué à l'adresse proposée, une adresse corrigée.

Selon un mode de réalisation préférée, au niveau du maître et au début de l'initialisation on émet un signal destiné à afficher sur un écran 24 l'heure donnée par une horloge interne 25 puis dès réception du message de l'esclave, on prépare 26 un texte en vue de son affichage sur l'écran et on déclenche une temporisation 27 dont l'arrivée à échéance 27' provoque le retour à l'initialisation, puis on teste 28, 29 jusqu'à l'échéance de la temporisation pour savoir si la touche de validation 21 ou bien au moins une touche du clavier 8 a été activée, dans l'affirmative on prépare le message d'acquiescement 22 ou 23.

Ainsi, après l'affichage automatique de l'heure sur l'écran 24, l'utilisateur, dès que le message d'attribution d'adresse est parvenu, voit apparaître sur ledit écran le texte contenant l'adresse proposée par la régie-maître lors du branchement avec la mention "OK ?".

A cette étape, l'utilisateur à le choix entre : accepter l'adresse proposée de l'esclave, en la validant au moyen de la touche 21 tout en imposant l'adresse d'habitation contenue dans la régie-maître ; refuser l'adresse proposée en programmant sur le clavier 8 une nouvelle adresse d'esclave tout en imposant également l'adresse d'habitation.

Grâce à la temporisation 27 combinée aux tests effectués sur la touche 21 et sur le clavier 8, on s'assure que le réseau ne sera pas bloqué au delà d'une durée déterminée, par exemple, de cinq minutes, durée permettant à l'utilisateur d'effectuer normalement le trajet entre l'esclave concerné et la régie-maître.

## Revendications

1. Procédé d'attribution d'adresses dans un réseau (1) de distribution d'énergie électrique d'une habitation et dans lequel on utilise la technique des courants porteurs pour la transmission d'informations entre des émetteurs-récepteurs (2, 3..) dits esclaves comportant chacun un microcontrôleur (4, 5..), et une mémoire EEPROM destinée à contenir différentes adresses relatives notamment à l'esclave et à l'habitation, et au moins une régie-maître (6) comportant un microcontrôleur (7) de gestion des informations qui est relié à un clavier de programmation (8) et qui contient dans sa mémoire des programmes utilisateurs et différentes adresses relatives notamment aux esclaves et à l'habitation,
**caractérisé par le fait que**, lors du branchement d'un esclave sur le réseau, l'esclave initialise la procédure d'attribution d'adresses en vérifiant (10) s'il a déjà reçu d'un autre esclave branché sur le réseau un message de demande d'attribution d'adresse sans distinction d'adresse d'habitation émis de cet autre esclave sur le réseau, dans l'affirmative l'esclave déclenche un sous-programme (11-12) d'attente de poursuite et, dans la négative, tout d'abord, un utilisateur appuie sur un bouton poussoir (13) de manière à déclencher un sous-programme (14) de fabrication d'un message contenant les informations suivantes : diffusion générale ; demande d'attribution d'adresse ; adresse de l'esclave demandeur proposée par la régie-maître, ensuite l'esclave envoie (15) le message sur le réseau, la régie-maître (6) scrutant en permanence le réseau, capte ledit message, l'utilisateur appuie soit sur une touche de validation (21) de la régie-maître (6), soit sur le clavier de programmation (8) de la régie-maître, puis la régie-maître (6) émet un message d'acquiescement (22-23) vers l'esclave demandeur, enfin, dès réception du message d'acquiescement (22-23), l'esclave demandeur met en mémoire (17) l'adresse d'habitation et l'adresse de l'esclave, cette dernière adresse pouvant être soit l'adresse proposée envoyée, soit une adresse modifiée par la régie-maître au moyen du clavier de programmation.

2. Procédé d'attribution d'adresses selon la revendication 1,
**caractérisé en ce que** l'utilisateur ayant appuyé sur la touche de validation (21), le message d'acquiescement (22) émis par la régie-maître contient les informations suivantes : diffusion générale, réponse à la demande d'adresse, adresse d'habitation, adresse proposée de l'esclave.

3. Procédé d'attribution d'adresses selon la revendication 1,
**caractérisé en ce que** l'utilisateur ayant appuyé sur le clavier de programmation (8), le message d'acquiescement (23) émis par la régie-maître contient les informations suivantes : diffusion générale, réponse à la demande d'adresse, adresse habitation, adresse corrigée de l'esclave.

4. Procédé d'attribution d'adresses selon l'une quelconque des revendications précédentes,
**caractérisé que par le fait que**, dès que l'utilisateur appuie sur le bouton poussoir (13), on envoie également un signal de déclenchement d'une temporisation (18) d'interruption de la poursuite de la procédure de demande d'attribution d'adresse, et si l'on arrive à l'expiration du temps de la temporisation, on émet un message (19) de libération des autres esclaves dont la procédure de demande d'attribution d'adresse était bloquée et l'on retourne à l'initialisation, sinon on poursuit la procédure.

5. Procédé d'attribution d'adresses selon la revendication 4,
**caractérisé par le fait que**, dans le sous-programme d'attente de poursuite on teste (11) pour savoir si on a reçu une réponse à la demande d'attribution d'adresse, et dans l'affirmative on retourne à la procédure d'initialisation, tandis que dans la négative on teste (12) pour savoir si un message de libération des esclaves est arrivé, dans l'affirmative on retourne à la procédure d'initialisation.

6. Procédé d'attribution d'adresses selon l'une quelconque des revendications précédentes,
**caractérisé par le fait que**, au niveau du maître et au début de l'initialisation on émet un signal destiné à afficher sur un écran (24) l'heure donnée par une horloge interne (25), puis dès réception du message de l'esclave, on prépare (26) un texte en vue de son affichage sur l'écran et on déclenche une temporisation (27) dont l'arrivée à échéance (27′) provoque le retour à l'initialisation, puis on teste (28, 29) jusqu'à l'échéance de la temporisation pour savoir si la touche de validation (21) ou bien au moins une touche du clavier (8) a été activée, dans l'affirmative on prépare le message d'acquiescement (22) ou (23).

## Patentansprüche

1. Verfahren zur Adressenzuordnung in einem elektrischen Energieverteilernetz (1) einer Wohnung, bei dem die Technik der Trägerströme zur Übertragung von Informationen zwischen Sende-Empfängern (2, 3...), sogenannten Slaves, die jeweils einen Mikrosteuerbaustein (4, 5 ...) und einen EEPROM-Speicher aufweisen, der zur Aufnahme verschiedener Adressen, insbesondere bezüglich des Slave und der Wohnung bestimmt ist, sowie wenigstens einer Mastersteuerung (6) verwendet wird, die einen Mikrosteuerbaustein (7) zur Verwaltung der Informationen aufweist und mit einer Programmiertastatur verbunden ist, und die in ihrem Speicher Benutzerprogramme und verschiedene Adressen, insbesondere bezüglich der Slaves und der Wohnung enthält,
**dadurch gekennzeichnet**, **daß** beim Anschluß eines Slave an das Netz der Slave die Adressenzuordnungsprozedur initialisiert, indem überprüft wird (10), ob er bereits von einem anderen an das Netz angeschlossenen Slave eine Adressenzuteilungsanforderungsnachricht empfangen hat, dies ohne Unterscheidung der von diesem anderen Slave auf dem Netz ausgesendeten Wohnungsadresse, daß der Slave bei Bejahung ein Subprogramm (11-12) zur Bereitschaftsweiterführung auslöst, und daß bei Verneinung ein Benutzer zunächst auf einen Tastknopf (13) drückt, so daß ein Subprogramm (14) zur Herstellung einer Nachricht ausgelöst wird, die die folgenden Informationen enthält: allgemeiner Rundruf; Adressenzuordnungsanforderung; von der Mastersteuerung vorgeschlagene Adresse des anfordernden Slave; daß dann der Slave die Nachricht auf das Netz schickt (15), wobei die Mastersteuerung (6) ständig das Netz abruft, die Nachricht erfaßt, daß der Benutzer entweder auf eine Validierungstaste (21) der Mastersteuerung (6) oder auf die Programmiertastatur (8) der Mastersteuerung drückt, dann die Mastersteuerung (6) eine Zustimmungsnachricht (22-23) zu dem anfordernden Slave aussendet und schließlich der anfordernde Slave ab Empfang der Antwort die Wohnungsadresse und die Adresse des Slave in den Speicher (17) aufnimmt, wobei letztere Adresse entweder die gesendete vorgeschlagene Adresse oder eine Adresse sein kann, die mittels einer Programmiertastatur durch die Mastersteuerung modifiziert worden ist.

2. Adressenzuordnungsverfahren nach Anspruch 1,
**dadurch gekennzeichnet**, **daß** dann, wenn der Benutzer die Validierungstaste (21) gedrückt hat, die von der Mastersteuerung ausgesendete Zustimmungsnachricht (22) die folgenden Informationen enthält: allgemeiner Rundruf; Anwort auf die Adressenanforderung, Wohnungsadresse, vorgeschlagene Adresse des Slave.

3. Adressenzuordnungsverfahren nach Anspruch 1,
**dadurch gekennzeichnet**, **daß** dann, wenn der Benutzer die Programmiertastatur (8) benutzt hat, die von der Mastersteuerung ausgesendete Zustimmungsnachricht (23) die folgenden Informationen enthält: allgemeiner Rundruf; Antwort auf die Adressenanforderung, Wohnungsadresse, korrigierte Adresse des Slave.

4. Adressenzuordnungsverfahren nach einem der vorhergehenden Ansprüche,
**dadurch gekennzeichnet**, **daß** dann, wenn der Benutzer auf den Tastknopf (13) drückt, auch ein Auslösesignal für eine Verzögerungssteuerung (18) zur Unterbrechung der Weiterführung der Prozedur zur Adressenzuordnungsanforderung geschickt wird, und daß bei Erreichen des Ablaufs der Verzögerungszeit eine Nachricht (19) zur Freigabe der anderen Slaves ausgesendet wird, deren Adressenzuordnungsprozedur blockiert war, und daß man zur Initialisierung zurückkehrt oder ansonsten die Prozedur weiterführt.

5. Adressenzuordnungsverfahren nach einem der vorhergehenden Ansprüche,
**dadurch gekennzeichnet**, **daß** in dem Subprogramm zur Bereitschaftsweiterführung getestet wird (11), ob eine Antwort auf die Adressenzordnungsanforderung empfangen wurde, und daß man bei Bejahung zur Initialisierungsprozedur zurückkehrt, während bei Verneinung getestet wird (12), ob eine Nachricht zur Freigabe der Slaves eingetroffen ist, wobei man bei Bejahung zur Initialisierungsprozedur zurückkehrt.

6. Adressenzuordnungsverfahren nach einem der vorhergehenden Ansprüche,
**dadurch gekennzeichnet**, **daß** auf der Ebene des Masters zu Beginn der Initialisierung ein Signal ausgesendet wird, das dazu bestimmt ist, auf einem Bildschirm (24) die von einer internen Uhr (25) angegebene Uhrzeit anzuzeigen, dann ab Empfang der Nachricht des Slave ein Text zur Anzeige auf dem Bildschirm erstellt wird (26) und eine Verzögerung (27) ausgelöst wird, nach deren Fälligkeit (27') die Rückkehr zur Initialisierung hervorgerufen wird, daß dann bis zur Fälligkeit der Verzögerung getestet wird (28, 29), um herauszufinden, ob die Validierungstaste (21) oder wenigstens eine Taste der Tastatur (8) aktiviert wurde, und bei Bejahung die Zustimmungsnachricht (22) oder (23) erstellt wird.

## Claims

1. Method for allocating addresses in a network (1) distributing electrical power within a dwelling, in which the technique of carrier currents is used to transmit information between so-called slave transmitter/receivers (2, 3...) each having a microcontroller (4, 5...), and an EEPROM memory designed to contain different addresses relating, notably, to the slave and to the dwelling, and at least one master control (6) having a microcontroller (7) for managing information, which is connected to a programming keypad (8) and which contains in its memory user programs and different addresses relating notably to the slaves and to the dwelling, characterised by the fact that, when a slave is connected to the network, the slave initiates the procedure for allocating addresses by verifying (10) whether it has already received, from another slave connected to the network, a message requesting the allocation of an address without distinguishing any dwelling address emitted by this other slave on the network, in the affirmative case the slave initiates a continuation-awaiting subprogram (11-12) and, in the negative case, first of all, a user presses a push button (13) so as to initiate a subprogram (14) for producing a message containing the following information: general distribution, address allocation request, address of the requesting slave proposed by the master control, then the slave sends (15) the message over the network, the master control (6), scanning the network continuously, picks up the said message, the user presses either a validation button (21) on the master control (6), or the programming keypad (8) of the master control, then the master control (6) emits an assent message (22-23) to the requesting slave, and finally, as soon as the assent message (22-23) is received, the requesting slave stores (17) the residence address and the address of the slave in memory, the latter address being able to be either the proposed address sent, or an address modified by the master control through the programming keypad.

2. Method for allocating addresses according. to Claim 1, characterised in that, the user having pressed the validation key (21), the assent message (22) emitted by the master control contains the following information: general distribution, response to the request for an address, dwelling address and proposed address of the slave.

3. Method for allocating addresses according to Claim 1, characterised in that, the user having operated the programming keypad (8), the assent message (23) emitted by the master control contains the following items of information: general distribution, response to the request for an address, dwelling address and corrected address of the slave.

4. Method for allocating addresses according to any one of the preceding claims, characterised by the fact that, when the user presses the push button (13), a signal initiating a delay period (18) for the interruption of the continuation of the procedure for requesting the allocation of an address is also sent and, if the delay time expires, a message (19) is sent which frees the other slaves, for which the procedure for requesting the allocation of an address was blocked, and the initialization is returned to, otherwise the procedure is resumed.

5. Method for allocating addresses according to Claim 4, characterised by the fact that, in the continuation-awaiting subprogram, a test is carried out (11) for discovering whether a response has been received to the request for the allocation of an address, and in the affirmative case, the initialization procedure is resumed, whereas in the negative case, a test is carried out (12) for discovering whether a message freeing the slaves has arrived, in the affirmative case the initialization procedure is resumed.

6. Method for allocating addresses according to any one of the preceding claims, characterised by the fact that, at the master and at the start of the initialization, a signal designed to display on a screen (24) the time given by an internal clock (25) is emitted, then, once the message has been received from the slave, a text is prepared (26) for display on the screen, and a delay period (27) is initiated, the end of which (27') triggers a return to the initialization, then tests are carried out (28, 29) until the end of the delay period in order to discover whether the validation key (21), or at least one key on the keypad (8), has been actuated, and in the affirmative case the assent message (22) or (23) is prepared.
